# EUROPEAN PATENT APPLICATION

(11) **EP 4 696 648 A1**
(43) Date of publication of application: **18.02.2026**
(21) Application number: 24194869.4
(22) Date of filing: 16.08.2024
(51) Int. Cl.: C01B 21/00, C06B 43/00

(54) **NITROGEN ALLOTROPES, THEIR PRODUCTION, AND USE AS HIGH-ENERGY DENSITY MATERIALS**

(71) Applicant: Justus-Liebig-Universität Gießen, Körperschaft des öffentlichen Rechts, 35390 Gießen (DE)
(72) Inventor: Schreiner, Peter R., 35435 Wettenberg (DE); Mardyukov, Artur, 45276 Essen (DE); Qian, Weiyu, 35392 Gießen (DE)
(74) Representative: Stumpf, Peter

(57) **Abstract**

Provided are nitrogen allotropes, their synthesis apparatus setups, and their application as high energy density materials. Methods for their preparation are also provided.

## Description

Provided are heretofore experimentally unreported nitrogen allotropes (polynitrogen compounds) as the next-generation high-energy density materials. Related methods (methods for synthesis of the nitrogen allotropes) are also provided.

### Field of the invention

The invention relates to the production and use of polynitrogen molecules as high-energy density materials (HEDMs).

### Background of the technology

The investigation of direct and clean high-energy density materials (HEDMs) is becoming a vital topic in the 21^{st} century due to growing environmental concerns and the greenhouse effect caused by the continuing combustion of fossil fuels. In this regard, nitrogen allotropes (polynitrogen compounds ) may offer advantageous solutions as they degenerate into a completely clean product (N₂), display high energy content as well as high propulsive and ultra-high flame temperatures. However, the extremely high stability of N₂ consequently makes higher nitrogen allotropes extremely reactive and thus very challenging in their preparation and characterization. In contrast to many theoretical predictions and speculations, there is no example of a preparation of a nitrogen allotrope with a significant lifetime (far above seconds, cf. Table 1).

### Content of the invention

The objective of the present invention is to provide high-energy density materials (HEDMs) for energy storage and combustion/explosion applications. This is achieved by revealing a method for the synthesis of (as a prime example) N₆ and other nitrogen allotropes.

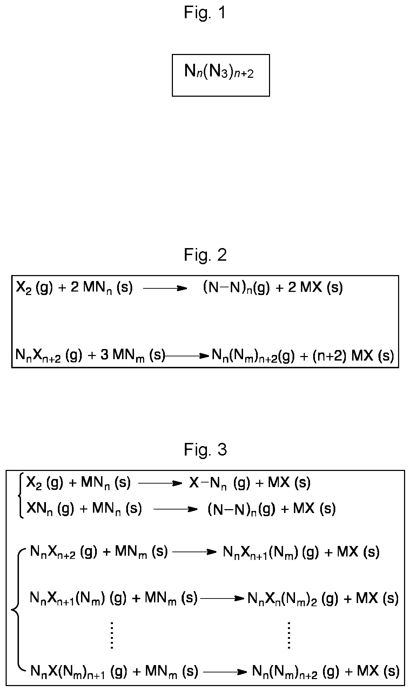

Provided herein are nitrogen allotropes and methods for producing them. The provided nitrogen allotropes are electron neutral and comprise only nitrogen atoms, according to the stoichiometric formula N*ₙ*(N₃)_{*n*+2} with *n* being a natural number including zero (0) (Figures 1 and 2), which can both be accomplished by reaction of halogens or nitrogen halides with polynitrogen ions. Reaction of polynitrogen ions with halogens result in nitrogen allotropes according to paradigm 1 and reaction of polynitrogen ions with nitrogen halides give nitrogen allotropes according to paradigm 2. Thus, both paradigms of construction, although slightly differing from each other, comprise corresponding alternative types of starting materials (i.e., reacting either halogens or nitrogen halides with polynitrogen ions) and lead to nitrogen allotropes according to general formula (I),

N*ₙ*(N₃)_{*n*+2} (I)

with *n* in formula (I) being a natural number including zero (0). N₆ as the embodiment of the present example is prepared at room temperature and characterized by matrix-isolation infrared spectroscopy and UV/vis spectroscopy at much lower temperature to avoid uncontrolled decomposition. That is, N₆ exists long enough in the gas phase (at room temperature) and can be trapped at low temperatures. Computations predict a large decomposition energy release of 185 kcal mol⁻¹ at the CCSD(T)/cc-pVTZ level of theory, with a barrier for decomposition into three moles of N₂ of about 16 kcal mol⁻¹. This barrier implies sufficient stability of N₆ at room temperature; it is therefore metastable. The present disclosure is not limited to either N₆ or matrix-isolation conditions, as N₆ can also be condensed and fully characterized at liquid nitrogen temperature (77 K) or higher. According to CVT/SCT (canonical variational transition-state theory/small-curvature tunneling) computations at the B3LYP/def2-TZVP level, the half-life of N₆ at various temperatures is presented in Table 1.

**Table 1: Computed half-life of N₆ at various temperatures**

| **Temperature** | 77 K | 195 K | 273 K | 298 K |
|---|---|---|---|---|
| **Half-life** | 132 years | 9 h | 354 ms | 36 ms |

Additional major features and advantages of the present disclosure will become apparent to those skilled in the art upon reviewing the following drawings, detailed description, and appended claims.

### Detailed embodiment of the invention

The embodiment provided herein is meant to be of exemplary nature. It is not to be understood as confining the scope of the invention. As is known to any person of ordinary skill in the art, the synthetic guiding principles (i.e., the general synthetic route) are also applicable to higher nitrogen allotropes and therefore can analogously be applied to different starting materials of the same type (halogens or nitrogen trihalides, polynitrogen salts), leading to different products without leaving the scope of the invention.

The word *"illustrative"* is used herein to mean serving as an example, instance, or illustration. Any aspect or design described herein as *"illustrative"* is not necessarily to be construed as preferred or advantageous over other aspects or designs.

Further, for the purposes of this disclosure and unless otherwise specified, "a" or "an" means *"one or more".*

If not already included all numerical values of parameters in the present disclosure are proceeded by the term *"about"* which means approximately. This encompasses those variations inherent to the measurement of the relevant parameter as understood by those of ordinary skill in the art. This also encompasses the exact value of the disclosed numeric value and values that round to the disclosed numeric value.

It is also known to any person of ordinary skill in the art that the dimensions and shapes of the apparati exemplarily revealed herein may be changed appropriately for upscaling the method of synthesis of the nitrogen allotropes without leaving the scope of the invention. Also, the materials in contact with the nitrogen allotropes or the starting materials of the nitrogen allotropes may also be changed upon optimization or upscaling without leaving the scope of the invention.

The preparation requires two substrates for the synthesis of the nitrogen allotropes: a dihalogen (F₂, Cl₂, Br₂, I₂) or nitrogen trihalide (NX₃, X = F, Cl, Br) and a polynitrogen salt (MNₙ). Depending on the situation, the halogen or nitrogen halide can be used either in pure form or dissolved in a suitable solvent and used in solution. The dihalogen or nitrogen trihalide is volatile and can be evaporated from a storage bulb by controlling the cooling bath temperature and/or the pressure within the apparatus, in which the synthesis is performed. The nitrogen trihalides can be prepared from the reaction of ammonium salts and corresponding dihalogens. The polynitrogen salts comprise either a polynitrogen cation (Nₙ⁺) and an arbitrary anion (e.g., SbF₆⁻, AsF₆⁻) or a polynitrogen anion (Nₙ⁻) and an arbitrary metal cation (e.g., Ag⁺, Na⁺, Mg²⁺).

The present nitrogen allotropes can be prepared in pure form and can be stored in a solution of liquid nitrogen, which is generally much easier to handle.

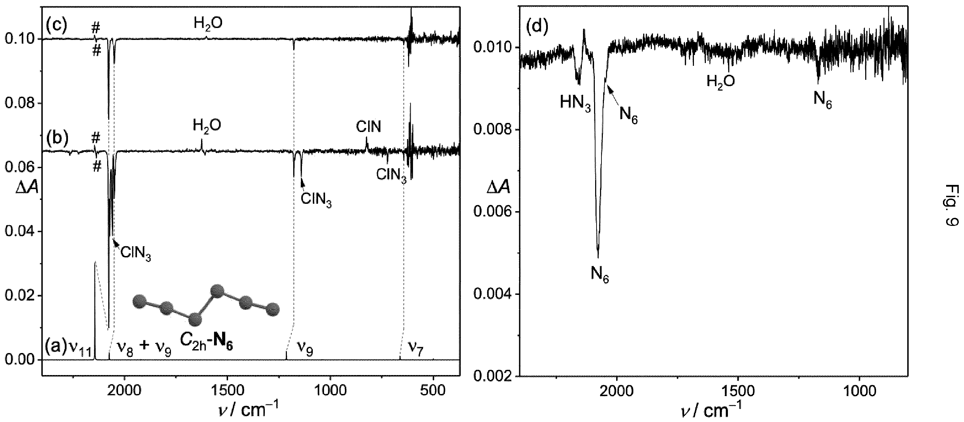

As an exemplary nitrogen allotrope, we outline the preparation of N₆ as follows. The structure is confirmed using infrared and UV/vis spectroscopies (Figures 9-11).

### Hexanitrogen (2λ⁵,5λ⁵-hexaaza-1,2,4,5-tetraene) N₆ (synonymously also called Diazide)

(1) X₂ preparation: Exemplarily, chlorine gas was bubbled into a suitable anhydrous solvent (CCl₄ was used in the current procedure) at 0 °C, the solvent being degassed before use. Alternatives such as benzene, toluene, hexane, etc. can also be utilized. Generally, any other solvent with comparable stability towards and solubility of chlorine gas can also be used without leaving the scope of the invention. Bromine was purified by vacuum distillation and used directly.
(2) AgNs preparation: silver azide was synthesized by adding a stoichiometric amount of a silver nitrate-water solution into a sodium azide-water solution in the dark. The precipitate was washed three times with anhydrous ethanol. The resulting slurry was loosely dispersed on one side of the inner surface of a straight quartz tube or the inner surface of a U-trap , then brought to reduced pressure to remove the solvent. Dispersing the slurry, resp. the polynitrogen salt, on a surface means that the polynitrogen salt is placed on the surface as evenly as is possible over at least a part of the surface. Any value of coverage of the surface may be chosen, depending upon how much nitrogen allotrope is to be produced or how fast it is to be produced. Preferred values are in the ranges of 20-40% of the inner surface for a straight quartz tube and 70-99% of the inner surface for a U-trap. All values in these ranges are included.
   There should not be any obstacles (e.g., quartz wool) inside the tube obstructing the dihalogen stream. The valves (e.g., J. Young valves) should be open completely when conducting reactions in a U-trap. The entire setup was covered by, e.g., aluminum foil, to avoid light exposure during the reactions.
(3) Cl₂ or Br₂ was evaporated (Cl₂-CCl₄: -140 °C, Br₂: -85 °C) from a storage bulb into a quartz tube or a U-trap under a dynamic vacuum (< 10⁻⁶ mbar). The word *"dynamic vacuum"* is used herein to mean that the vacuum pump is continuously running throughout the whole experiment. All reaction products were co-condensed with a large excess of argon (typically 60-120 mbar from a 2000 mL storage bulb) on the surface of the matrix window at 10 K. Compound N₆ can also be prepared in pure form without a carrier gas and can be deposited as a film on suitable solid surface (for example the matrix window or other inert surfaces) at 77 K (the boiling point of liquid N₂). The entire setup was protected from light, for instance, through covering with aluminum foil or any other intransparent material.

The foregoing description of the illustrative embodiment of the disclosure has been presented for purpose of illustration and description only. It is not intended to be exhaustive or to limit the disclosure to the precise form disclosed, and modifications and variations are possible in light of the above teachings or may be acquired from the practice of the disclosure. The embodiment is chosen and described in order to explain the principles of the disclosure and as an example of practical application of the disclosure to enable one skilled in the art to utilize the disclosure in various embodiments and with various modifications as suited to the particular use contemplated. It is intended that the scope of the disclosure be defined by the claims appended hereto and their equivalents.

The formation of the nitrogen allotrope with a linear structure and a stoichiometry of N*ₙ*(N₃)_{*n+*2} is evident for *n* = 0 from the recorded IR-signals of N₆, at 2076.6, 2049.0, 1177.6, and 642.1 cm⁻¹. Nitrogen allotropes according to Fig. 2. can be prepared analogously from the reaction of the corresponding nitrogen trihalides with polynitrogen salts.

### Description of the drawings

Illustrative (resp. exemplary) embodiments of the herein disclosed invention will be described further with reference to the accompanying drawings.
- Fig. 1 :: A first illustrative (exemplary) type of nitrogen allotrope according to the invention. Index n is a natural number including zero (0). For *n* = 0 we arrive at N₆ outlined as an example here. Other values of n are also possible, e.g., 1, 2, 3, 4, 5, 6 etc., leading to higher nitrogen allotropes; n = 1 yields N₁₀, with a structure that has a nitrogen in the center being substituted with three azide moieties.
- Fig. 2 :: A schematic (exemplary) illustration of the synthesis equation of two types of exemplary nitrogen allotropes.
- Fig. 3 :: A schematic (exemplary) illustration of the stepwise synthesis equation of two types of exemplary nitrogen allotropes.

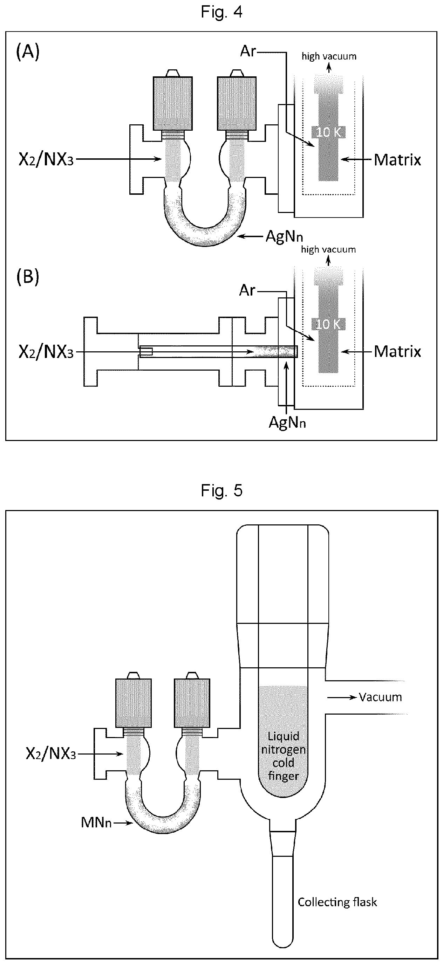

- Fig. 4:: Exemplary schematic setup of an apparatus for the preparation of nitrogen allotropes under matrix-isolation conditions.
- Fig. 5:: Schematic example of an apparatus for the preparation of nitrogen allotropes at ambient partial pressures of all reactive gases (halogens, nitrogen-halogen interelement compounds) or under general vacuum conditions, down to 10⁻¹² mbar, with all possible values in this range included. A carrier gas with higher or lower partial pressures may be employed.

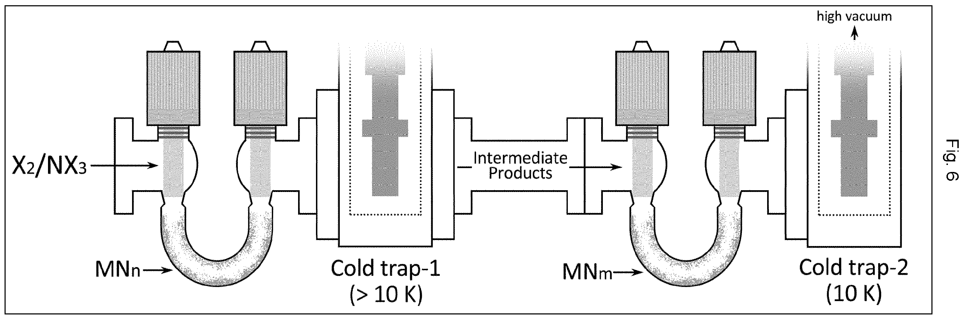

- Fig. 6:: Schematic example of a cascade apparatus for the preparation of nitrogen allotropes under conditions as outlined in the caption of Figure 5 or matrix-isolation conditions to maximize the reaction yield and for product purification purposes.

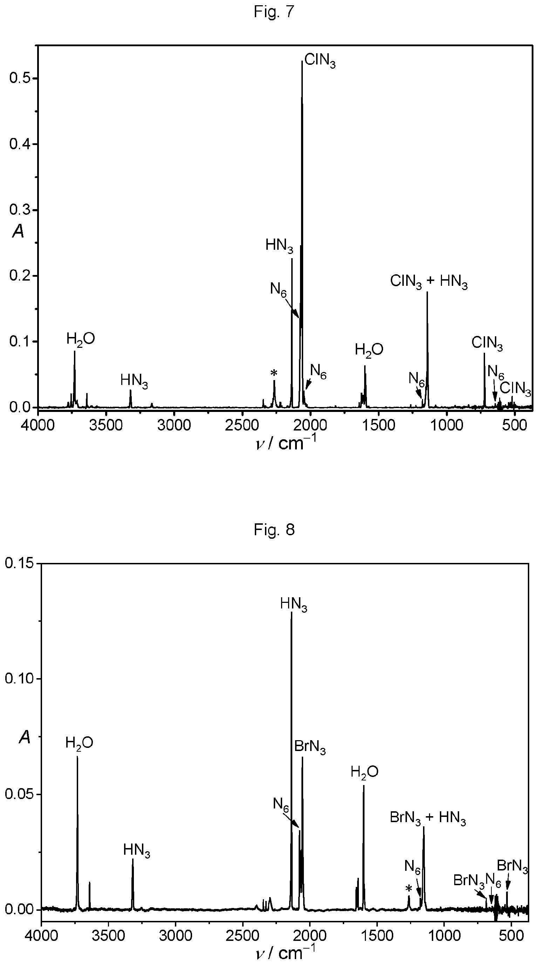

- Fig. 7:: Infrared spectrum (example) of the matrix-isolated gas-phase reaction products of Cl₂ and AgNs at 10 K (signals of N₆ are indicated).
- Fig. 8:: Infrared spectrum (example) of the matrix-isolated gas-phase reaction products of Br₂ and AgNs at 10 K (signals of N₆ are indicated).
- Fig. 9:: Exemplary different infrared spectra showing the changes of the 436 nm irradiation of the matrix-isolated or solid-state gas-phase reaction products of Cl₂ and AgNs (b) and Br₂ and AgNs (c) at 10 K:
(a) Computed DVPT2 anharmonic infrared spectrum for N₆ at B3LYP/def2-TZVP, the combination bands ν₈ + ν₉ was included. (b) Difference spectrum showing the changes after 8 min 436 nm irradiation of Cl₂ and AgNs reaction products. (c) Difference spectrum showing the changes after 6 min 436 nm irradiation of Br₂ and AgNs reaction products. (d) Difference spectrum of *C*₂ₕ-N₆ shows the changes after 8 min 436 nm irradiation of Br₂ and AgNs reaction products film at 77 K. Bands of HN₃ are marked (#).

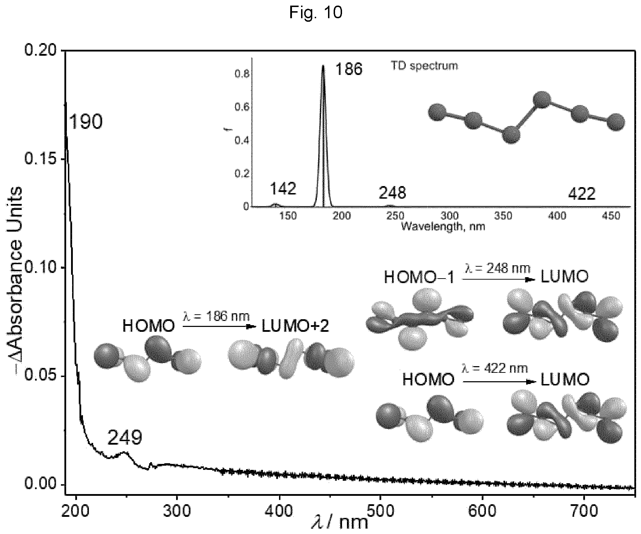

- Fig. 10:: Example of a difference UV/vis spectrum illustrating the changes resulting from 436 nm irradiation of matrix-isolated gas-phase reaction products of Br₂ and AgNs at 10 K. Inset: Computed [TD-B3LYP/def2-TZVP] electronic transitions for Ne.

## Claims

1. A nitrogen allotrope according to formula
N*ₙ*(N₃)_{*n*+2},
with *n* being a natural number including zero (0).

2. A method for synthesizing a nitrogen allotrope according to claim 1, **characterized in that** it comprises the following steps
a) providing a polynitrogen salt, dispersed upon at least 30% of the inner surface of a reaction chamber, the polynitrogen salt comprising
- a polynitrogen cation (Nₙ⁺) with n > 2 and a counter-anion or
- a polynitrogen anion (Nₙ⁻) with n > 2 and a counter-cation;
b) overflowing the polynitrogen salt, being dispersed over the inner surface of the reaction chamber according to step a) with a gaseous halogen or a gaseous nitrogen halide, thus reacting the halogen or the nitrogen halide with the polynitrogen salt, so that the nitrogen allotrope forms;
c) collecting the volatile reaction products from step b), including the nitrogen allotrope from the reaction of the gaseous halogen or the gaseous nitrogen halide with the solid polynitrogen salt within a product-collecting device.

3. A gas phase reactor constructed to perform the method for synthesizing a nitrogen allotrope according to the claims above, **characterized in that** it comprises the following parts
(i) at least one gas-inlet device;
(ii) a reaction chamber;
(iii) a product-collecting device;
(iv) a gas-outlet device;
whereas the reaction chamber (ii) is located between the at least one gas-inlet device (i) and the product-collecting device (iii), thus connecting the at least one gas-inlet device (i) and the product -collection device (iii), so that a gasflow from the at least one gas-inlet device (i) through the reaction chamber (ii) into the product collection device (iii) and out of it to the gas-outlet device (iv) is possible, the gas-outlet device (iv) being located downstream from the product collection device (iii).

4. A gas-phase reactor according to claim 3, **characterized in that** in between the product collection device (iii) and the gas-outlet device (iv) a second reaction chamber (ii-2) and a second product-collection device (iii-2) are located.

5. A gas-phase reactor according to claim 3 or claim 4, **characterized in that** it comprises a cover that prevents light entering into the gas-phase reactor.
